# EUROPEAN PATENT APPLICATION

(11) **EP 1 786 206 A2**
(43) Date of publication of application: **16.05.2007**
(21) Application number: 06123478.7
(22) Date of filing: 03.11.2006
(51) Int. Cl.: H04N 7/16, H04N 7/167

(54) **Multimedia signal receiving apparatus and control method thereof**

(30) Priority: 09.11.2005 KR 20050107236
(71) Applicant: Samsung Electronics Co., Ltd., Suwon-si 442-742 Gyeonggi-Do (KR)
(72) Inventor: Lee, Kwang-ho, Anyang-si, Gyeonggi-do (KR)
(74) Representative: Brandon, Paul Laurence

(57) **Abstract**

A multimedia signal receiving apparatus and a control method thereof are provided for easily storing and/or transmitting an encrypted AV signal together with a decryption key without decrypting the encrypted AV signal. The multimedia signal receiving apparatus includes: an interface (10) which receives a multimedia signal containing an encrypted AV signal and packet data, and a decryption key used to decrypt the encrypted audio/video (AV) signal; a packet processor (30) which generates packet data containing information relating to the decryption key; and a controller (90) which controls the packet processor to generate the packet data containing the information relating to the decryption key when the decryption key is set.

## Description

The present invention relates to multimedia signal receiving apparatus and control methods thereof.

With the rapid advance of the digital broadcasting technology, there is a demand for apparatuses capable of receiving a variety of multimedia signals at the same time, processing and displaying the multimedia signal from diverse media such as an IEEE 1394 device, a universal serial bus (USB) memory, a national renewable security system (NRSS), and a personal video recorder (PVR). Since the multimedia signal carrying the AV signal and the packet data is digitized, the multimedia signal is subject to the prospect of illegal copying with the progress of Internet. Hence, there is an increasing demand for the restricted reception and the copy prevention.

In response to this, copyright protection is legislated to regulate multimedia signal providers and multimedia signal recipients with respect to the AV signal containing a video signal and an audio signal. Also, more effort is exerted for the prevention of AV signal copying. However, disadvantageously, the prevention of AV signal copying also blocks a user from copying the AV signal to continuously view the AV signal or to view the AV signal using another medium.

A multimedia signal receiving apparatus of the related art, upon receiving the encrypted AV signal for copy prevention, periodically updates the decryption key to decrypt the encrypted AV signal. Next, the multimedia signal receiving apparatus decrypts the encrypted AV signal based on the decryption key to store the AV signal, and then encrypts the decrypted AV signal again according to its own cryptography. As such, since the multimedia signal is stored according to different schemes, the related art multimedia signal receiving apparatus requires a system of a high specification and thus increases the manufacturing cost.

Another related art multimedia signal receiving apparatus decrypts the encrypted AV signal and stores the decrypted AV signal without its own encryption. This related art multimedia signal receiving apparatus has a shortcoming in that an unauthorized person may copy the multimedia signal because the multimedia signal is stored without encryption.

Preferred embodiments of the present invention aim to provide a multimedia signal receiving apparatus for easily storing and/or transmitting an encrypted AV signal together with a decryption key without decrypting the encrypted AV signal, and a control method thereof.

Suitably, there is provided a multimedia signal receiving apparatus comprising: an interface which receives a multimedia signal containing an encrypted AV signal and packet data, and a decryption key used to decrypt the encrypted AV signal; a packet processor which generates packet data containing information relating to the decryption key; and a controller which controls the packet processor to generate the packet data containing the information relating to the decryption key when the decryption key is set.

Suitably, the packet processor generates the packet data by inserting the information relating to the decryption key into the packet data which is received through the interface.

Suitably, the packet processor generates a separate packet data which contains the information relating to the decryption key.

Suitably, the packet data comprises a private table into which private data is to be inserted, and the packet processor generates the packet data containing the decryption key by inserting the information relating to the decryption key into the private table.

Suitably, the packet processor inserts the private data into the private table based on Annex H of the International Organization for Standardization (ISO)/International Electrotechnical Commission (IEC) 13818-1 specification.

Suitably, the private table comprises a section table, and the packet processor inserts decryption key indicating information to discriminate the decryption key from other data, and decryption key information corresponding to a decryption key value into the section table.

Suitably, the section table is configured according to the ISO/IEC 13818-1 specification.

Suitably, the section table comprises at least one of a program association table (PAT), a program map table (PMT), and a master guide table (MGT).

Suitably, the private table is in a header of the multimedia signal.

Suitably, the private table is in an adaptation field which carries a program clock reference (PCR), and the packet processor inserts decryption key indicating information to discriminate the decryption key from other data, and decryption key information corresponding to a decryption key value into the private table.

Suitably, the decryption key is periodically updated by an external device.

Suitably, the multimedia signal receiving apparatus further comprises: a signal processor which comprises a demultiplexer for separating the multimedia signal into the AV signal and the packet data, wherein the controller controls the demultiplexer to separate the AV signal and the packet data when the multimedia signal containing the encrypted AV signal and the packet data is received through the interface.

Suitably, the signal processor further comprises a multiplexer which synthesizes the AV signal and the packet data, wherein the controller, when the packet data into which the information relating to the decryption key is inserted is generated, controls the multiplexer to synthesize the generated packet data and the encrypted AV signal.

Suitably, the signal processor further comprises a signal decrypter which decrypts the encrypted AV signal based on the information relating to the decryption key which is inserted into the packet data.

Suitably, the signal processor further comprises a decryption key extractor which extracts the information relating to the decryption key from the packet data into which the decryption key is inserted at the packet processor, and transfers the extracted information to the signal decrypter.

Suitably, the controller stores the packet data and the encrypted AV signal that are synthesized at the signal processor, in at least one of an internal memory or an external storage device.

Suitably, the multimedia signal receiving apparatus further comprises a display which displays an image based on the AV signal decrypted at the signal decrypter.

Suitably, the packet data comprises system information (SI).

Suitably, the SI comprises program specification information (PSI) according to the ISO/IEC 13818-1 specification, and program and system information protocol (PSIP) according to the Advanced Television Systems Committee (ATSC) 65/B specification

According to another aspect of the present invention, there is provided a control method of a multimedia signal receiving apparatus, comprising: receiving a multimedia signal which contains an encrypted AV signal and packet data; setting a decryption key to decrypt the encrypted AV signal; and generating packet data which contains information relating to the decryption key.

Suitably, the generating of the packet data comprises inserting the information relating to the decryption key into the packet data.

Suitably, the generating of the packet data comprises generating a separate packet data which contains the information relating to the decryption key.

Suitably, the packet data comprises a private data into which private data is to be inserted, and the generating of the packet data which contains the information relating to the decryption key comprises inserting the information relating to the decryption key into the private table.

Suitably, the packet processor inserts the private data into the private table based on Annex H of the International Organization for Standardization (ISO)/International Electrotechnical Commission (IEC) 13818-1 specification.

Suitably, the private table comprises a section table, and the generating of the packet data which contains the information relating to the decryption key comprises inserting decryption key indicating information to discriminate the decryption key from other data, and decryption key information corresponding to a decryption key value into the section table.

Suitably, the section table is configured according to the ISO/IEC 13818-1 specification.

Suitably, the private table is in a header of the multimedia signal.

Suitably, the private table is in an adaptation field which carries a PCR, and the generating of the packet data which contains the information relating to the decryption key comprise inserting decryption key indicating information, to discriminate the decryption key from other data, and decryption key information corresponding to a decryption key value into the private table.

Suitably, the control method further comprises periodically updating the decryption key by an external device.

The present invention will become apparent and more readily appreciated from the following description of the exemplary embodiments, taken in conjunction with the accompany drawings, in which:
FIG. 1 is a block diagram of a multimedia signal receiving apparatus according to an exemplary embodiment of the present invention;
FIGS. 2A and 2B are diagrams illustrating a table into which a decryption key is inserted according to an exemplary embodiment of the present invention;
FIGS. 3A and 3B are diagrams illustrating a table into which the decryption key is inserted according to an alternative exemplary embodiment of the present invention; and
FIG. 4 is a flowchart illustrating operations of the multimedia signal receiving apparatus according to an exemplary embodiment of the present invention.

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

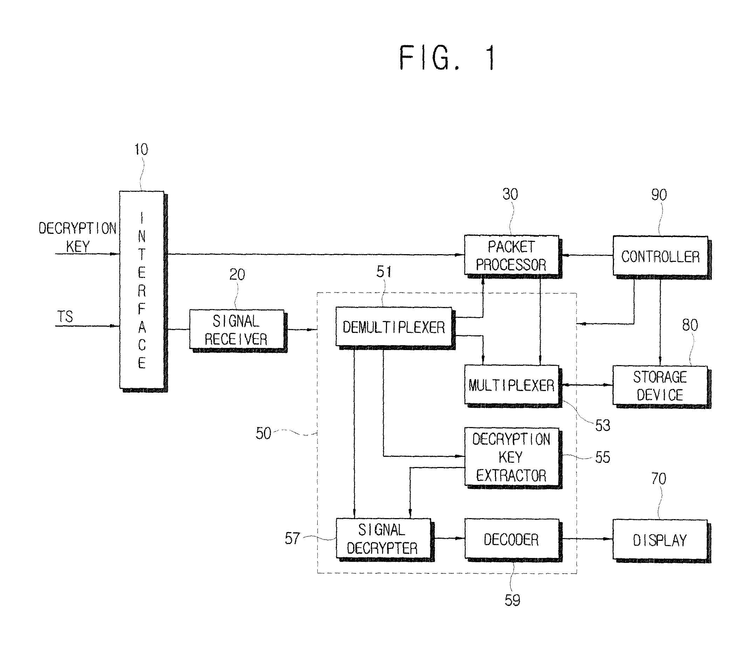

As shown in FIG. 1, a multimedia signal receiving apparatus according to an exemplary embodiment of the present invention, includes an interface 10 for receiving a multimedia signal which contains an encrypted AV signal and packet data, and a decryption key, a packet processor 30 for generating packet data which includes information relating to the decryption key, and a controller 90 for controlling the components. The multimedia signal receiving apparatus may further include a signal processor 50, a storage device 80, and a display 70.

In the case that the multimedia signal or the decryption key is input from an external device, the interface 10 may include an input terminal (not shown) for receiving the multimedia signal or the decryption key from the external device. Particularly, the interface 10 may include a terminal for receiving the multimedia signal, and a terminal for receiving the decryption key through communications with a cable card or a smart card. In addition, the interface 10 may further include an Integrated Drive Electronics (IDE) interface, an IEEE 1397 interface, and an USB interface for communicating with an external IDE device, an IEEE 1394 device, and a USB memory, respectively.

Herein, the decryption key can be periodically transmitted from and updated by, for example, the cable card or the smart card. The interface 10 is provided with an input terminal to which the cable card or the smart card is connected. Although it has been illustrated that the cable card or the smart card transmitting the decryption key is the external device, the interface 10 may include the cable card or the smart card therein.

The multimedia signal is transmitted in the form of a transport stream (TS) which is packetized by time division multiplexing of a digital AV signal, which includes a digital video signal and a digital audio signal, and digital data information being the packet data. Note that the packet data contains system information (SI) including program specification information (PSI) according to the International Organization for Standardization (ISO)/International Electrotechnical Commission (IEC) 13818-1 specification, and program and system information protocol (PSIP) according to the Advanced Television Systems Committee (ATSC) 65/B specification.

The encrypted TS contains the encrypted AV signal and the unencrypted packet data. The packet data is not encrypted because the AV signal cannot be decrypted with the encrypted packet data.

The packet processor 30, when the decryption key is input via the interface 10, inserts the incoming decryption key into the packet data of the multimedia signal. In doing so, the packet processor 30 can insert decryption key indicating information to discriminate the decryption key from other data, and decryption key information corresponding to the decryption key value into the packet data.

According to an alternative exemplary embodiment of the present invention, the packet processor 30, upon receiving the decryption key via the interface 10, generates new packet data containing the decryption key, separately from the packet data received through the interface 10.

The signal processor 50 processes the multimedia signal to be displayable on the display 70, to be explained, and outputs the processed multimedia signal to the display 70. The signal processor 50 includes a demultiplexer 51, a multiplexer 53, a decryption key extractor 55, a signal decrypter 57, and a decoder 59.

The demultiplexer 51 separates the TS multimedia signal into a video signal and an audio signal of the AV signal, and the packet data. Next, the demultiplexer 51 outputs the AV signal to the multiplexer 53. At this time, the demultiplexer 51 outputs all or part of the packet data to the packet processor 30, if necessary. In more detail, the demultiplexer 51, under the control of the controller 90, outputs the packet data to the packet processor 30 when the decryption key is to be inserted into a SI table, which will be described later.

The multiplexer 53, when there are more than two programs in the AV signal, can select a specific program the user wants to store, and multiplex only the decryption key and the information required for demultiplexing. For instance, in case that the AV signal carries AV signals relating to a plurality of programs corresponding to a plurality of virtual channels, that is, AV signals relating to virtual channel numbers 11-1 and 11-3, only the AV signal of the channel number 11-1 can be stored.

Accordingly, the multiplexer 53 can select and multiplex only the required information. As a result, when the multimedia signal is to be stored or transmitted to outside, the storage capacity or the transmission capacity can be reduced.

Meanwhile, the multimedia signal multiplexed by the multiplexer 53 may be stored in the storage device 80 under the control of the controller 90 to be explained later. Although FIG. 1 merely illustrates that the multiplexed multimedia signal from the multiplexer 53 is stored in the storage device 80, not being limited to it, the multiplexed multimedia signal can be stored in the internal memory or an external storage device.

The external storage device may be a USB storage device, an IEEE 1394 storage device, an external hard disk drive (HDD), or a wireless transceiver. In case that the external storage device is the USB storage device, the multimedia signal receiving apparatus transfers the multimedia signal to the USB storage device in conformity with a USB protocol. In case that the external storage device is the IEEE 1394 storage device, the multimedia signal receiving apparatus transfers the multimedia signal to the IEEE 1394 storage device in conformity with an IEEE 1394 protocol. In case that the external storage device is the HDD, the multimedia signal receiving apparatus transfers the multimedia signal to the HDD storage device in conformity with the IDE or Small Computer System Interface (SCSI) protocol. In case that the external storage device is the wireless transceiver, the multimedia signal receiving apparatus transfers the multimedia signal to the wireless transceiver in conformity with a wireless protocol. Note that the multimedia signal stored in the storage device can be applied to the interface 10 and the demultiplexer 51.

The decryption key extractor 55 extracts information relating to the decryption key from the packet data having the decryption key inserted by the packet processor 30, and provides the extracted information to the signal decrypter 57. Next the signal decrypter 57 decrypts the encrypted AV signal based on the information relating to the decryption key which is provided from the decryption key extractor 55.

The decoder 59 decodes the AV signal decrypted at the signal decrypter 57 and the packet data, and outputs the decoded AV signal and packet data to the display 70.

The display 70 displays an image according to the signal processed at the signal processor 50. The display 70 includes a display module (not shown) displaying the image, and a module driver (not shown) processing the signal input from the signal processor 50 and controlling to display the image on the display module. The display module can employ various display modules such as a cathode ray tube (CRT), a digital light processing (DLP) projector, a liquid crystal display (LCD), and a plasma display panel (PDP).

In case that the display module is the DLP projector, the module driver may include an optical engine. In case of the LCD, the module driver may include a printed circuit board for converting the signal fed from the signal processor 50 to a data signal and a gate signal. In this respect, the display 70 has the corresponding structure of the module driver according to the type of the display module.

The controller 90 controls the above-mentioned components such that the multimedia signal received through the interface 10 can be decrypted with the decryption key and displayed on the display 70.

Specifically, the controller 90 controls the demultiplexer 51 to demultiplex the multimedia signal received via the interface 10 to the video signal and the audio signal of the AV signal and the packet data. When the controller 90 intends to insert the packet data separated at the demultiplexer 51 or the decryption key of the packet data into the SI table, the controller 90 controls to feed only the data to insert to the packet processor 30. It is unnecessary to transfer the packet data from the demultiplexer 51 to the packet processor 30 when the controller 90 intends to generate a new SI table or separate packet data, rather than inserting the decryption key into the SI table of the packet data received through the interface 10. Hereafter, descriptions are made in case that the packet processor 30 inserts the decryption key into the existing packet data, to ease the understanding of the present invention.

The controller 90 controls the demultiplexer 51 to feed a signal of the multimedia signal, which is not applied to the packet processor 30, to the multiplexer 53.

When the decryption key is set, the controller 90 controls the packet processor 30 to insert the information relating to the decryption key into the packet data. Since the decryption key is periodically updated by an external device, the controller 90 determines whether the decryption key is periodically updated. When the decryption key is updated on a periodic basis, the controller 90 controls the packet processor 90 to insert the information relating to the decryption key into the packet data. At this time, the controller 90 determines that the decryption key is set when the decryption key is updated. Even when the decryption key is not updated, the controller 90 can determine that the decryption key is periodically set, and then controls the packet processor 30 to insert the information relating to the decryption key into the packet data.

When the multimedia signal is to be stored in the storage device 80 according to a storage control signal, the controller 90 controls the packet processor 30 to insert the information relating to the updated decryption key into the packet data if the decryption key is updated while the multimedia signal is stored in the storage device 80.

For instance, when the user intends to store the multimedia signal corresponding to a channel 11 from 2 p.m. to 4 p.m., the packet processor 30 periodically inserts the information relating to the decryption key into the packet data regardless of whether or not the decryption key is updated by the external device during the storing time of the multimedia signal, that is, from 2 p.m. to 4 p.m.

The packet data contains a private table. The controller 90 can control the packet processor 30 to insert the information relating to the decryption key into the private table.

Herein, it is regarded that the decryption key is included in the private data as described in Annex H of the ISO/IEC 13818-1 specification. Thus, to insert the decryption key into the packet data, the controller 90 controls the packet processor 30 to insert the private data into the private table of the packet data as described in Annex H of the ISO/IEC 13818-1 specification. More specifically, the controller 90 can control the packet processor 30 to insert the decryption key into the packet data according to at least one of a first method for inserting the private data into a TS packet, a second method for inserting the private data into a TS adaptation field table, a third method for inserting the private data into a packetizer elementary stream (PES) packet, a fourth method for inserting the private data into descriptors, and a fifth method for inserting the private data into a private section, as described in Annex H of the ISO/IEC 13818-1 specification.

The first method is available to designate packet identification (PID) for the private data transmission in a program map table (PMT). The fourth method inserts the PMT table into the descriptor. It is noted that the third method is inapplicable to the present invention because the PES is encrypted.

According to an exemplary embodiment of the present invention, the controller 90 can control the packet processor 30 to insert the decryption key into the packet data according to the second method.

In detail, the controller 90 can control to insert the information relating to the decryption key in a header of the packet data. For instance, the private table, into which the information relating to the decryption key is inserted, may be in an adaptation field of the header of the packet data which carries program clock reference (PCT) using transport_private_data_flag. The packet processor 30 may insert into the private table the decryption key indicating information, to discriminate the decryption key from other data, and the decryption key corresponding to the decryption key value. Additionally, the packet processor 30 may insert information indicative of whether the decryption key is inserted.

In doing so, the decryption key may be decrypted according to a certain scheme to prevent an unauthorized device from detecting and decrypting the encrypted AV signal.

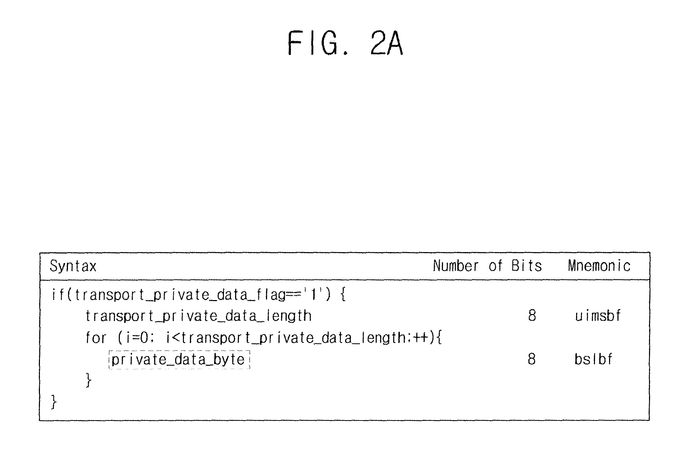

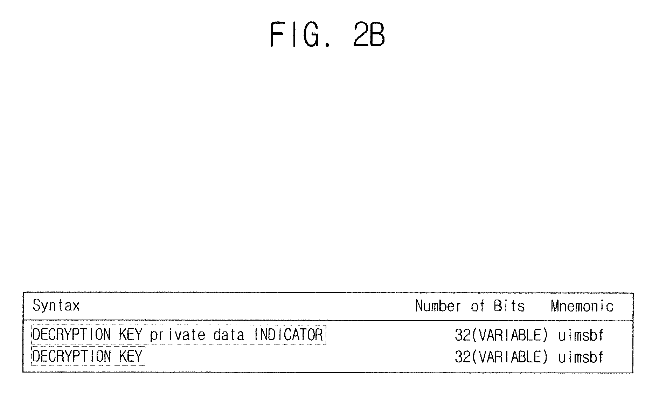

Referring now to FIGS. 2A and 2B, the packet processor 30 inserts the information relating to the decryption key into private_data_byte in transport_private_data_flag of the packet data of FIG. 2A. The information relating to the decryption key can be inserted according to various methods. By way of example, the decryption key indicating information (decryption key private data indicator of FIG. 2B) and the decryption key information are inserted into private_data_byte. In this case, it is preferred, but not necessary, that the decryption key indicating information is appended to at least one of the front and the end of the decryption key in order to prevent the decryption key from mixing up with other private data.

The controller 90 controls the packet processor 30 to insert the information relating to the decryption key, that is, the decryption key indicating information and the decryption key information into private_data_byte of transport_private_data_flag of the adaptation field and to feed the data including the information relating to the decryption key to the multiplexer 53.

According to an alternative exemplary embodiment of the present invention, the controller 90 controls the packet processor 30 to insert the decryption key into the packet data according to the fifth method as explained earlier.

In more detail, the controller 90 controls to insert the information relating to the decryption key into the private section. If the private data packet containing the information relating to the decryption key is generated by defining a new PID and table_id, the private data packet is subject to the collision with other private data packets. Hence, the packet processor 30 inserts the information relating to the decryption key into a section table which is adopted for the standardization, by use of the private section as described in the ISO/IEC 13818-1 specification.

In brief, as the private table, into which the information relating to the decryption key is inserted, is included in the section table, the packet processor 30 can insert the decryption key indicating information to discriminate the decryption key from the other data, and the decryption key information corresponding to the decryption key value, into the section table.

The section table can include at least one of a PAT, a PMT, and a MGT.

Hereafter, it is exemplified that the section table is the PAT. The PID of the PAT is 0×0000 and its table_id is fixed to 0×00. According to the ISO/IES 13818-1, as for private_indicator being 1, the private section is determined. However, in the PAT, the bit field of private_indicator is set to 0 unconditionally. After private_indicator is set to 1 using the same PID and table_id as the PAT, when the private_indicator is 1 while the PID and table_id are the PAT during the reproduction, the private data having the information relating to the decryption key (decryption key private_data) is determined and thus the decryption key is extracted.

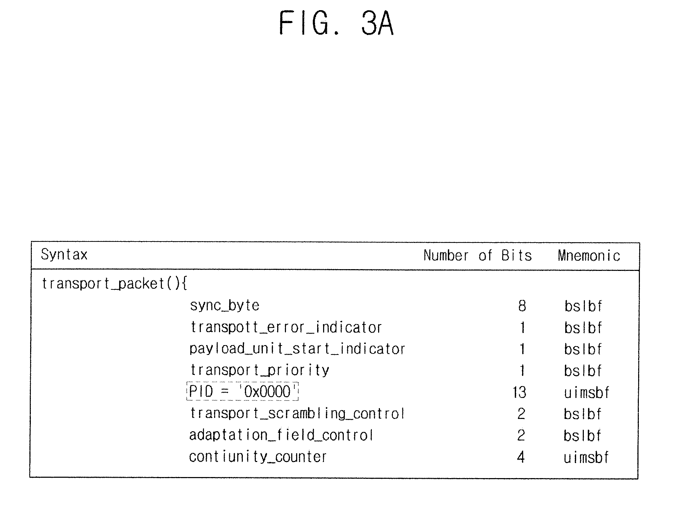

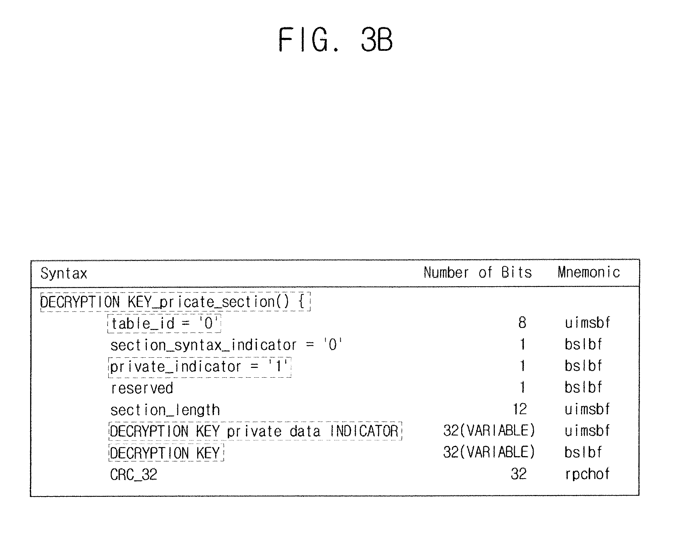

Referring to FIGS. 3A and 3B, the packet processor 30 adjusts the header to hold the information of the PID being 0×0000 as shown in FIG. 3A, and organizes the table such that table_id is 0 and private_indicator is 1 in a payload, that is, in the data area as shown in FIG. 3B. As in the alternative exemplary embodiment, the packet processor 30 can insert the decryption key indicating information to discriminate the decryption key from other data, and the decryption key information corresponding to the decryption key value, into the private table.

It is preferable, but not necessary, that section_syntax_indicator is set to 0 all the time because it does not comply with the standard. The section_length is the value acquired by subtracting the size as far as section_length from the total size of private key_private_section.

The controller 90 controls the packet processor 30 to insert the information relating to the decryption key, that is, the decryption key indicating information and the decryption key information, into the section table and to output the data having information relating to the decryption key on the multiplexer 53.

When the data having the information relating to the decryption key is applied to the multiplexer 53, the controller 90 controls the multiplexer 53 to synthesize the packet data including the data into which the information relating to the decryption key is inserted, and the encrypted AV signal.

The controller 90 may store the AV signal and the packet data synthesized at the multiplexer 53 in the storage device 80 according to a storage control signal. Alternatively, the controller 90 may transfer the AV signal and the packet data synthesized at the multiplexer 53 to an external storage device according to a storage control signal.

According to a reproduction control signal, the multimedia signal stored in the storage device 80 can be output on the demultiplexer 51. The demultiplexer 51 demultiplexes the multimedia signal to the video, the audio, and the packet data. Next, the controller 90 controls to feed the demultiplexed AV signal and packet data to at least one of the signal decrypter 57 and the decryption key extractor 55. The controller 90 controls the demultiplexer 51 to transfer the packet data required to extract the decryption key by the decryption key extractor 55. The decryption key extractor 55 extracts the decryption key by reversing the decryption key insertion method of the packet processor 30. For instance, the demultiplexer 51 extracts the private data with respect to the decryption key using the PID and table_id, and then outputs the private data as to the decryption key to the decryption key extractor 55. Note that the decryption key extractor 55 may serve to extract the private data as to the decryption key from the packet data.

The controller 90 controls the signal decrypter 57 to decrypt the AV signal having the video signal and the audio signal fed from the demultiplexer 51 based on the decryption key extracted at the decryption key extractor 55, and feeds the decrypted signal to the decoder 59. The controller 90 controls the decoder 59 to decode the fed AV signal.

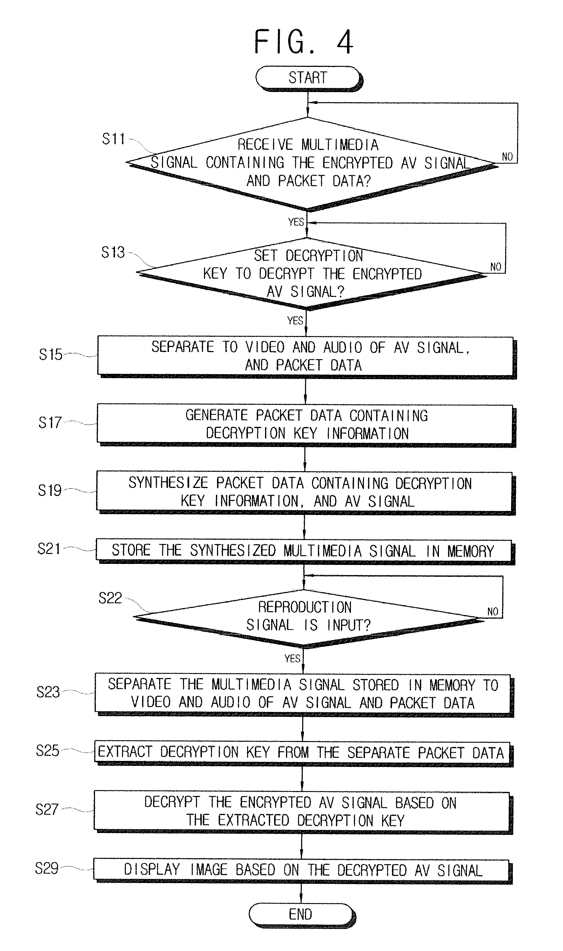

Referring to FIG. 4, the multimedia signal receiving apparatus receives the multimedia signal containing the encrypted AV signal and the packet data through the interface 10 (S11). The multimedia signal receiving apparatus receives the decryption key required to decrypt the encrypted AV signal from the external device and stores the received decryption key (S13). The decryption key is periodically updated by the external device. It is noted that operation S13 may precede operation S11 or follow the operation S11. Particularly, since the decryption key is periodically updated, operation S13 of setting the decryption key can be performed any time during the operations in FIG. 4.

The multimedia signal received through the interface 10 is separated to the video and the audio of the AV signal, and the packet data at the demultiplexer 51 (S15). All or part of the packet data is applied to the packet processor 30 for the insertion of the decryption key. To the contrary, the packet data received through the interface 10 may not be applied to the packet processor 30 as mentioned earlier. In this case, the packet processor 30 generates packet data containing the information relating to the decryption key (S17). In the exemplary embodiment of the present invention, the packet processor 30 inserts the decryption key indicating information to discriminate the decryption key from other data, and the decryption key information corresponding to the decryption key value, into the private table into which the information relating to the decryption key is inserted. In the alternative exemplary embodiment of the present invention, the packet processor 30 generates new packet data having a private table (SI table) which includes the information relating to the decryption key. How to insert the information relating to the decryption key into the private table has been explained already. Thus, further detailed descriptions thereof will be omitted for brevity.

The packet data having the private table into which the information relating to the decryption key is inserted by the packet processor 30, is applied to the multiplexer 53. The multiplexer 53 re-generates a multimedia signal by synthesizing the packet data and the AV signal (S19). The multimedia signal generated at the multiplexer 53 is stored in the storage device 80 or the internal memory under the control of the controller 90 (S21).

To reproduce the multimedia signal (S22), the controller 90 feeds the multimedia signal stored in the storage device 80 to the demultiplexer 51. The demultiplexer 51 separates the multimedia signal into the video and the audio of the encrypted AV signal, and the packet data (S23). The decryption key extractor 55 extracts the decryption key from the packet data separated by the demultiplexer 51 by reversing the method of inserting the decryption key at the packet processor 30 (S25). Next, the signal decrypter 57 decrypts the encrypted AV signal based on the decryption key extracted at the decryption key extractor 55. The signal decrypted at the signal decrypter 57 is decoded by the decoder 59, processed to be displayable on the display 70, and displayed as the image on the display 70 (S29). Also, sound is output through a speaker (not shown).

It has been described that the multimedia signal receiving apparatus includes the display 70. The display 70 may be embedded in the multimedia signal receiving apparatus or disposed in the outside separately.

For instance, if the multimedia signal receiving apparatus is a set-top box separately from a digital television (TV), the multimedia signal receiving apparatus does not include the display 70. However, if the multimedia signal receiving apparatus is a digital TV, the multimedia signal receiving apparatus has the display 70.

It has been described that the multimedia signal receiving apparatus includes the multiplexer 53 for the understanding. If at least part of program information separated from the multimedia signal is not stored, that is, if the entire multimedia signal received through the interface 10 is stored, there is no need to multiplex the signal at the multiplexer 53. In this case, the multiplexer 53 may not be provided in the multimedia signal receiving apparatus.

Therefore, the multimedia signal received through the interface 10 is inserted with the information relating to the decryption key thereto and stored in the storage device 80 without having to pass through the demultiplexer 51 and the multiplexer 53. To reproduce the multimedia signal stored in the storage device 80, the multimedia signal is applied to and demultiplexed at the demultiplexer 51.

Although it has been illustrated that the multiplexer 53, the demultiplexer 51, the decryption key extractor 55, the signal decrypter 57, and the decoder 59 are accommodated in the single part of the multimedia signal receiving apparatus, the present invention is not limited thereto. The multiplexer 53, the demultiplexer 51, the decryption key extractor 55, the signal decrypter 57, and the decoder 59 may be accommodated in a separated device. In further detail, the multimedia signal receiving apparatus may include all, at least one, or none of the multiplexer 53, the demultiplexer 51, the decryption key extractor 55, the signal decrypter 57, and the decoder 59.

The multimedia signal containing the encrypted AV signal is stored and transferred by appending the decryption key, which is updated periodically, to the multimedia signal. Therefore, it is possible to facilitate the transmission, the storage, and the reproduction of the multimedia signal which is encrypted to restrict the receptions, without decryption.

In light of the foregoing, the multimedia signal receiving apparatus and the control method thereof of preferred embodiments of the present invention can facilitate the storing of the encrypted AV signal together with the decryption key without decryption. Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents. Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multimedia signal receiving apparatus comprising:
an interface (10) which receives a multimedia signal comprising an encrypted audio/video (AV) signal and packet data, and a decryption key used to decrypt the encrypted AV signal;
a packet processor (30) which generates packet data comprising information relating to the decryption key; and
a controller (90) which controls the packet processor to generate the packet data comprising the information relating to the decryption key when the decryption key is set.

2. The multimedia signal receiving apparatus according to claim 1, wherein the packet processor (30) generates the packet data by inserting the information relating to the decryption key into the packet data which is received through the interface (10).

3. The multimedia signal receiving apparatus according to claim 1 or claim 2, wherein the packet processor (30) generates a separate packet data which comprises the information relating to the decryption key.

4. The multimedia signal receiving apparatus according to any preceding claim, wherein the packet data comprises a private table into which private data is to be inserted, and the packet processor (30) generates the packet data comprising the decryption key by inserting the information relating to the decryption key into the private table

5. The multimedia signal receiving apparatus according to claim 4, wherein the packet processor (30) inserts the private data into the private table based on Annex H of the International Organization for Standardization (ISO)/International Electrotechnical Commission (IEC) 13818-1 specification.

6. The multimedia signal receiving apparatus according to claim 4 or claim 5, wherein the private table comprises a section table, and the packet processor inserts decryption key indicating information to discriminate the decryption key from other data, and decryption key information corresponding to a decryption key value into the section table.

7. The multimedia signal receiving apparatus according to claim 6, wherein the section table is configured according to the ISO/IEC 13818-1 specification.

8. The multimedia signal receiving apparatus according to claim 6 or claim 7, wherein the section table comprises at least one of a program association table (PAT), a program map table (PMT), and a master guide table (MGT).

9. The multimedia signal receiving apparatus according to claim 4, wherein the private table is in a header of the multimedia signal.

10. The multimedia signal receiving apparatus according to claim 9, wherein the private table is in an adaptation field which carries a program clock reference (PCR), and the packet processor (30) inserts decryption key indicating information to discriminate the decryption key from other data, and decryption key information corresponding to a decryption key value into the private table.

11. The multimedia signal receiving apparatus according to claim 4, wherein the decryption key is periodically updated by an external device.

12. The multimedia signal receiving apparatus according to any preceding claim, further comprising:
a signal processor (50) which comprises a demultiplexer (51) which separates the multimedia signal into the AV signal and the packet data,
wherein the controller (90) controls the demultiplexer to separate the AV signal and the packet data when the multimedia signal comprising the encrypted AV signal and the packet data is received through the interface.

13. The multimedia signal receiving apparatus according to claim 12, wherein the signal processor (50) further comprises a multiplexer (53) which synthesizes the AV signal and the packet data,
wherein the controller (90), when the packet data into which the information relating to the decryption key is inserted is generated, controls the multiplexer to synthesize the generated packet data and the encrypted AV signal.

14. The multimedia signal receiving apparatus according to claim 13, wherein the signal processor (50) further comprises a signal decrypter (57)which decrypts the encrypted AV signal based on the information relating to the decryption key which is inserted into the packet data.

15. The multimedia signal receiving apparatus according to claim 14, wherein the signal processor (50) further comprises a decryption key extractor (55) which extracts the information relating to the decryption key from the packet data into which the decryption key is inserted at the packet processor (30), and transfers the extracted information to the signal decrypter (57).

16. The multimedia signal receiving apparatus according to claim 15, wherein the controller (90) stores the packet data and the encrypted AV signal that are synthesized at the signal processor (50), in at least one of an internal memory and an external storage device (80).

17. The multimedia signal receiving apparatus according to claim 16, further comprising a display (70) which displays an image based on the AV signal decrypted at the signal decrypter (57).

18. The multimedia signal receiving apparatus according to claim 17, wherein the packet data comprises system information (SI).

19. The multimedia signal receiving apparatus according to claim 18, wherein the SI comprises program specification information (PSI) according to the ISO/IEC 13818-1 specification, and program and system information protocol (PSIP) according to the Advanced Television Systems Committee (ATSC) 65/B specification

20. A control method of a multimedia signal receiving apparatus, comprising:
receiving a multimedia signal which comprises an encrypted audio/video (AV) signal and packet data;
setting a decryption key to decrypt the encrypted AV signal; and
generating packet data which comprises information relating to the decryption key.

21. The control method according to claim 20, wherein the generating of the packet data comprises inserting the information relating to the decryption key into the packet data.

22. The control method according to claim 20 or claim 21, wherein the generating of the packet data comprises generating a separate packet data which comprises the information relating to the decryption key.

23. The control method according to any one of claims 20 - 22, wherein the packet data comprises private data into which private data is to be inserted, and
the generating of the packet data which comprises the information relating to the decryption key comprises inserting the information relating to the decryption key into the private table

24. The control method according to claim 23, wherein the packet processor (30) inserts the private data into the private table based on Annex H of the International Organization for Standardization (ISO)/International Electrotechnical Commission (IEC) 13818-1 specification.

25. The control method according to claim 23 or claim 24, wherein the private table comprises a section table, and
the generating of the packet data which comprises the information relating to the decryption key comprises inserting decryption key indicating information to discriminate the decryption key from other data, and decryption key information corresponding to a decryption key value into the section table.

26. The control method according to claim 25, wherein the section table is configured according to the ISO/IEC 13818-1 specification.

27. The control method according to claim 25 or claim 26, wherein the private table is in a header of the multimedia signal.

28. The control method according to claim 27, wherein the private table is in an adaptation field which carries a program clock reference (PCR), and the generating of the packet data which comprises the information relating to the decryption key comprise inserting decryption key indicating information, to discriminate the decryption key from other data, and decryption key information corresponding to a decryption key value into the private table.

29. The control method according to any one of claims 23 - 28, further comprising periodically updating the decryption key by an external device.
